# EUROPEAN PATENT APPLICATION

(11) **EP 2 974 899 A1**
(43) Date of publication of application: **20.01.2016**
(21) Application number: 14398013.4
(22) Date of filing: 24.10.2014
(51) Int. Cl.: B60K 15/03

(54) **Process to manufacture fuel tanks from medium- or high-strength steel sheets or advanced high-strength steel sheets with organometallic coating, flanged edges and crimped inlet tubes, vent and unchoking device**

(30) Priority: 14.07.2014 BR 102014017286
(71) Applicant: Aethra Sistemas Automotivos S/A, 32686-190 Minas Gerais (BR)
(72) Inventor: Sportelli, Pietro, 32686-190 Minas Gerais (BR)
(74) Representative: Pereira da Cruz, Joao

(57) **Abstract**

This invention patent covers a process to manufacture a fuel tank (reservoir) consisting of two body halves (2 and 3) made from medium- or high-strength steel sheets with organometallic coating and a bending arrangement of flanged edges, in which the fastening of the inlet tubes (filler neck) (8), vent (9), unchoking device (10) and the part with a truncated cone channel shape (11) is made by means of brazing and/or a special cold crimping process and mechanical pressing of the tubes with stop rings (12) on the outside sheet wall (13) that forms the fuel reservoir for motor vehicles.

## Description

This invention patent is related to the automotive industry, particularly the auto parts industry, and covers a process to manufacture a fuel tank (reservoir) from medium- or high-strength ("HSS" - "High Strength Steel") steel sheets with organometallic coating and flanged edges, in which the fastening of the inlet tubes (filler neck), vent and unchoking device is made by means of crimping and/or brazing.

In view of the growing concern among organizations and public agencies about the environment, there is an increasing requirement to keep the level of fuel emissions from the fuel tank at a minimum and to use as many recyclable parts as possible. The outcome of such a requirement is that nowadays fuel tanks manufacturers target a virtually zero fuel emission. In this context, and considering the need for reducing the vehicle mass and raw material consumption, there is a growing trend toward using medium- and high-strength steels with organometallic coating to manufacture fuel reservoirs.

Among the main advantages it is worth mentioning the high mechanical strength, excellent drawability properties, high fuel corrosion resistance and weathering resistance, and lower manufacturing cost due to the economic difference when compared to fuel tanks manufactured from plastic or steels with conventional coatings.

According to the current technique to manufacture metallic fuel tanks (reservoirs), a medium- or high-strength steel coil is initially cut to length by a press machine in order to make the stamping process, also called blank, easier. Then, the metallic sheet is coatinged with a tin layer deposited on both faces of the sheet by means of an electrolytic process. This coating aims at protecting the sheet against corrosion and weathering. This metallic sheet is coiled prior to being sent to the next process step.

Then, the press machine fastens the blank on a die and the forming punch pushes the steel into the die. After the drawing operation in the die/forming punch machine, the tank is taken to a shearing machine that trims the edges to the final shape. In this production stage, the tool cuts the steel by means of a shearing mechanism, similar to the process of cutting with a shear. Holes are drilled in the fastening points on the tank edge.

Then, using a seam welding process, the two body halves of the tank are joined together. As a consequence, in the mere juxtaposition of the body halves' sharp edges for welding, the moment of inertia in the flat area is low, which requires the use of sufficiently large reinforcements in order to reduce the stress concentration and provide the assembly with increased resistance. Subsequently, a coating of "KTL" paint and "PVC" is applied to the outside face of the lower body half in order to prevent abrasive wear.

Finally, the fuel storage and feeding system of motor vehicles is fastened to the tank by means of nozzles extruded on the sheet surface by means of brazing process and is made up of three main connections: inlet tube (filler neck), vent and unchoking device. The result of such fastening arrangement is a round extruded steel coupling tube hot coatinged with tin alloy, one end of which is coupled to the tank wall for welding.

The first step in the process of fastening such connections is to position the already closed tank in a welding device, followed by the filler neck, vent and unchoking device. Then the contact area is cleaned to avoid impurities in the weld. A tin solder ring is applied and the tubes are welded simultaneously using a LPG welding torch. As can be seen from this procedure, the assembling process is complex and requires control parameters in view of the heat input from the torch flame.

This patent is innovative in the sense that is presents a fuel reservoir manufactured from medium- or high-strength steels with organometallic surface coating and flanged edges, whose fastening to the inlet tubes (filler neck), vent and unchoking device is made through the crimping and/or brazing process. This new tank model does not require external painting; the stamping oil and the applied PVC improves the assembly rigidity and minimizes the need for fastening reinforcement in motor vehicles. Moreover, the tank is impermeable and meets the strictest requirements in terms of evaporative fuel emissions, on top of being an ecologically correct product (100% recyclable).

The fuel reservoir manufactured from medium- or high-strength steels with organometallic surface coating and flanged edges, whose fastening to the inlet tubes (filler neck), vent and unchoking device is made through the crimping and/or brazing process covered by this patent of invention, can be better understood by referring to the attached illustrations, which are an integral part of this report and contain numerical references, along with a description of the system's technical specificities. Such illustrations do not restrict the system's configuration in terms of its dimensions, proportions and eventual finishing types or the reach of its practical application, a technique that was unknown before the issuance of this patent.

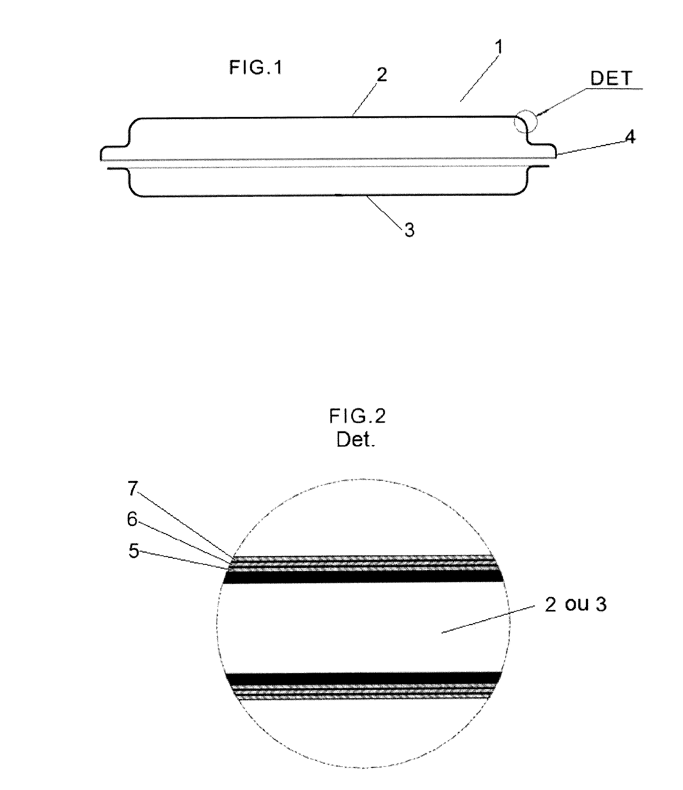

Figure 1 is a cross section view of the fuel tank (reservoir), containing an arrangement (flange) introduced in the flat edge of the upper body half over the edge of the lower body half, showing the detail of the steel sheet section.
Figure 2 is a schematic view of the indicated sheet, showing the substrate (steel) layers and coatings, both outside and inside the tank.

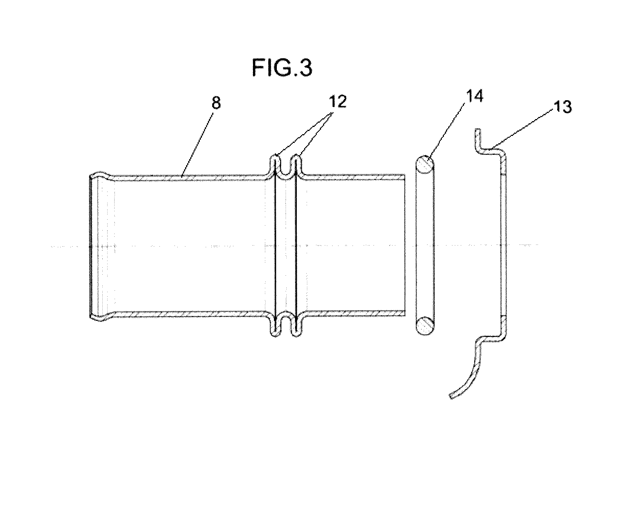

Figure 3 is an exploded view showing the inlet tube (filler neck) before the external crimping of a fuel tank.

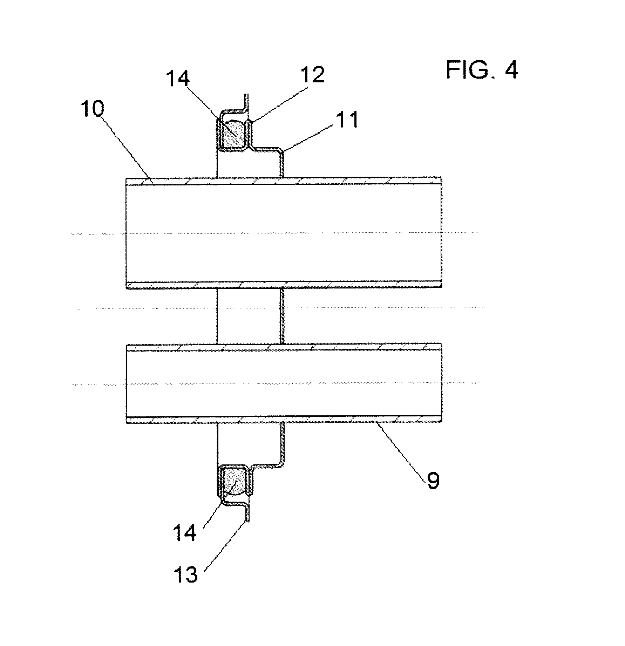

Figure 4 is a partial cross section view of the vent tube, unchoking tube and a piece with a truncated cone channel shape, after the crimping.

According to these figures and their numerical references, this patent covers a fuel tank (reservoir) (1) consisting of two body halves (2 and 3) made from medium-or high-strength steel sheets with organometallic coating and a bending arrangement of flanged edges (4).

The coating is applied directly on the two faces of the metallic sheet, as follows: one coating layer consisting of Zinc and Iron or Zinc and Nickel and their intermetallic constituents (5), followed by a second layer consisting of organometallic coating (6) covered with dry lubricant (7); or alternatively, application of a first layer of coating consisting of Zinc only and its intermetallic constituents (5), followed by a second layer consisting of organometallic coating (6) covered with dry lubricant (7).

The manufacturing process starts with the drawing operation of two body halves (2 and 3) using a die / forming punch machine. Then, the parts are cut with a shearing machine to obtain the final edge shape and consequently the flanged edges are formed by means of an additional bending process.

Finally, the inlet tube (8), the vent tube (9), the unchoking tube (10) and the parts with a truncated cone channel shape (11) are fastened by means of special cold crimping process and mechanical pressing of the tubes with stop rings (12) on the outside sheet wall (13) that forms the fuel reservoir (1) for motor vehicles. Optionally, the fastening of the inlet tube, vent tube and unchoking tube can be made through a brazing process.

The coupling devices are round parts with a truncated cone channel shape (11) and produced by means of extrusion on the fuel tank wall (13); the fuel inlet tube (8) is provided with two flanges in the form of stop rings (12) to house the sealing rings (14).

The vent tubes (9) and unchoking device (10) are fastened to the fuel tank wall (13) by means of welding to the part with a truncated cone channel shape (11). This part with a truncated cone channel shape (11), for its turn, is cold crimped through a mechanical process using a special tool to form flanges in the form of stop rings (12) in the extruded and drawn tank wall (13).

In practical terms, this patent presents a solution that results in lower manufacturing and component assembling costs, reduces the evaporative emissions and is an ecologically correct product. Moreover, its use aims at reducing the mass and the raw material consumption in the manufacture of metallic tanks by replacing low-strength steel by medium- and high-strength steels, with the consequent reduction in the sheet thickness for drawing the body halves.

Using medium- or high-strength steel to manufacture metallic automotive tank body halves by means of a drawing process enables to lower the amount of material used in the process, in addition to reducing the overall mass of the assembly through smaller wall thickness.

## Claims

1. Process to manufacture fuel tanks from medium- or high-strength steel sheets or advanced high-strength steel sheets with organometallic coating, flanged edges and crimped inlet tubes, vent and unchoking device **characterized by** the fact that, in the manufacturing process of the fuel tank (reservoir) (1), the fuel tank (reservoir) (1) is made up of two body halves (2 and 3) from medium- or high-strength steel sheets with organometallic coating and flanged edges (4), and the coating is applied directly on the two faces of the metallic sheet, as follows: one coating layer consisting of Zinc and Iron or Zinc and Nickel or only zinc and their intermetallic constituents (5), followed by a second layer consisting of organometallic coating (6) covered with dry lubricant (7).

2. Process to manufacture fuel tanks from medium- or high-strength steel sheets or advanced high-strength steel sheets with organometallic coating, flanged edges and crimped inlet tubes, vent and unchoking device according to claim 1, **characterized by** the fact that, in the drawing operation to make the two body halves (2 and 3), a die / forming punch machine is used. Then, the parts are cut with a shearing machine to obtain the final edge shape and consequently the flanged edges (4) are formed by means of an additional bending process.

3. Process to manufacture fuel tanks from medium- or high-strength steel sheets or advanced high-strength steel sheets with organometallic coating, flanged edges and crimped inlet tubes, vent and unchoking device according to claim 1, **characterized by** the fact that, in the manufactured fuel tank (1), the coupling devices are produced by means of extrusion of the sheet (13)of the fuel tank wall (13) in the form of a central circular hole with a truncated cone channel shape (11), being the fuel inlet tube (8) provided with two flanges in the form of stop rings (12) to house the sealing rings (14).

4. Process to manufacture fuel tanks from medium- or high-strength steel sheets or advanced high-strength steel sheets with organometallic coating, flanged edges and crimped inlet tubes, vent and unchoking device according to claim 3, **characterized by** the fact that the inlet tube (8), the vent tube (9), the unchoking tube (10) and the parts with a truncated cone channel shape (11) are fastened on the outside wall of the sheet (13) that forms the fuel reservoir (1) by means of brazing or a special cold crimping process and mechanical pressing of the tubes with stop rings (12).

5. Process to manufacture fuel tanks from medium- or high-strength steel sheets or advanced high-strength steel sheets with organometallic coating, flanged edges and crimped inlet tubes, vent and unchoking device according to claim 4, **characterized by** the fact that the vent tubes (9) and unchoking device (10) are fastened to sheet (13) of the fuel tank wall by means of welding to the part with a truncated cone channel shape (11), this part with a truncated cone channel shape (11), in turn, being cold crimped through a mechanical process using a special tool to form flanges in the form of stop rings (12) in the extruded and drawn sheet (13) of the tank wall.
